# EUROPÄISCHE PATENTANMELDUNG

(11) **EP 2 620 868 A1**
(43) Veröffentlichungstag der Anmeldung: **31.07.2013**
(21) Anmeldenummer: 12188493.6
(22) Anmeldetag: 15.10.2012
(51) Int. Cl.: G06F 9/35, G06Q 10/06

(54) **Arbeitsfluss-Management-System für Computernetze**

(30) Priorität: 30.01.2012 DE 102012201255
(71) Anmelder: systego GmbH, 77836 Rheinmünster (DE)
(72) Erfinder: Huber, Christian, 77815 Bühl (DE)
(74) Vertreter: Lemcke, Brommer & Partner

(57) **Zusammenfassung**

Vorgeschlagen wird ein Arbeitsfluss-Management-System für Computernetze mit einer Mehrzahl von Computern, nämlich wenigstens einem Server-Computer (5) und einer Anzahl von Client-Computern (1-4), welche Client-Computer über ein Computernetz mit dem Server-Computer verbunden sind, welcher Server-Computer eine IT-Infrastruktur (5a) bereitstellt, aufweisend:
a) eine erste programm-/hardwaretechnische Einrichtung (5e), die zum Erstellen und Verwalten von Arbeitsflüssen programmtechnisch dazu ausgebildet ist, eine Folge von Funktionen, die zur Bearbeitung wenigstens eines Objektes in dem Computernetz notwendig sind, auszuwählen, bei Bedarf zu parametrisieren und zu verknüpfen, deren Funktionsübergänge von wenigstens einem Computer in dem Computernetz steuerbar sind, um aus der Folge von Funktionen einen Arbeitsfluss zu erstellen, welche erste Einrichtung für das Erstellen des Arbeitsflusses eingerichtet ist für einen Zugriff auf
b) wenigstens eine elektronische Speichereinrichtung (5b), in welcher Speichereinrichtung eine Anzahl an Vorlagen (V1-V3) für Arbeitsflüsse gespeichert sind,
c) Prozessormittel (5c), welche dazu ausgebildet und eingerichtet sind, nach Maßgabe durch die erste Einrichtung (5e) wenigstens einen auf einer der Vorlagen (V1-V3) basierenden Arbeitsfluss zur Ausführung zu bringen, um das Objekt zu bearbeiten, wobei der ausgeführte Arbeitsfluss Zugriff hat auf
d) wenigstens eine Datenbankeinrichtung (5d), welche Datenbankeinrichtung Ist-Daten der IT-Infrastruktur (5a) enthält, so dass der ausgeführte Arbeitsfluss zum Ausführungszeitpunkt mit Ist-Daten der IT-Infrastruktur anreicherbar und dadurch bei seiner Ausführung an einen Ist-Zustand der IT-Infrastruktur anpassbar ist.

## Beschreibung

Die Erfindung betrifft ein Arbeitsfluss-Management-System nach dem Oberbegriff des Anspruchs 1 für Computernetze mit einer Mehrzahl von Computern, nämlich wenigstens einem Server-Computer und einer Anzahl von Client-Computern, welche Client-Computer über ein Computernetz mit dem Server-Computer verbunden sind, welcher Server-Computer eine IT-Infrastruktur bereitstellt und/oder selbst Teil einer solchen ist.

Arbeitsflüsse, sogenannte Workflows, ermöglichen das effiziente Bearbeiten von Aufgaben in Computernetzen, da sie bestimmte Arbeitsabläufe standardisieren, beschleunigen und somit weniger fehleranfällig machen. Dies spart im Wesentlichen Arbeitszeit aufgrund eines reduzierten Arbeitsaufwands seitens der Systemadministration. In der Vergangenheit wurden Workflows oft händisch von speziell ausgebildeten und berechtigten Systembenutzern in Form von Skripten oder dergleichen erstellt, was extrem zeitaufwändig ist und entsprechend ausgebildete Benutzer erfordert. Eine Weiterentwicklung dieses Ansatzes sieht vor, sogenannte (grafische) Workflow-Editoren vorzuhalten, welche das einfache Zusammenstellen von Arbeitsflüssen nach dem Drag-and-Drop-Prinzip auf einer grafischen Oberfläche auch durch ungeübtere Benutzer ermöglichen.

Unter einem Arbeitsfluss oder Workflow wird im Folgenden jede Abfolge von (Programm-)Funktionen verstanden, die zur Bearbeitung wenigstens eines Objektes in dem Computernetz notwendig sind. In diesem Zusammenhang ist der Begriff "Objekt" quasi unbeschränkt zu verstehen; er umfasst unter anderem die Installation von Software, beispielsweise eines Gerätetreibers, das Anlegen und Verwalten von Benutzerkonten, die Freigabe einer Datei oder eines Peripheriegeräts, die Überwachung eines systeminternen oder systemexternen Ereignisses, beispielsweise in einer Produktionsanlage, oder dergleichen. Zur Erstellung eines Arbeitsflusses oder Workflows sind die zugehörigen Funktionen auszuwählen, bei Bedarf zu parametrisieren, das heißt insbesondere mit entsprechenden Input-Daten zu versorgen und in geeigneter Weise zu verknüpfen, wobei Funktionsübergänge zwischen den genannten Funktionen von wenigstens einem Computer in dem Computernetz steuerbar sind, wodurch aus der Folge von Funktionen ein Arbeitsfluss oder Workflow entsteht.

In der Vergangenheit bestand diesbezüglich nicht nur die bereits angesprochene Problematik, wie bzw. in welcher Weise Arbeitsflüsse in dem Computernetz erstellt und verfügbar gemacht werden, sondern es war insbesondere auch als nachteilig anzusehen, dass bestehende Arbeitsflüsse oder Workflows relativ statisch ausgebildet waren, und nicht auf eine aktuelle Konfiguration der IT-Infrastruktur bzw. deren Leistungen/Leistungsfähigkeit Rücksicht nehmen konnten.

Der Erfindung liegt die Aufgabe zugrunde, ein Arbeitsfluss-Management-System der eingangs genannten Art vorzuschlagen, welches es einerseits ermöglicht, die Erstellung, Verfügbarmachung und Ausführung von Arbeitsflüssen flexibel zu handhaben, und welches andererseits die Möglichkeit schafft, bei der Ausführung von Arbeitsflüssen auf den Ist-Zustand der IT-Infrastruktur hinsichtlich ihrer aktuellen Konfiguration und Leistung/Leistungsfähigkeit Rücksicht zu nehmen.

Diese Aufgabe wird erfindungsgemäß gelöst durch ein Arbeitsfluss-Management-System mit den Merkmalen des Unteranspruchs 1. Vorteilhafte Weiterbildungen der Erfindungsidee finden sich in den Unteransprüchen 2 - 14, deren Wortlaut hiermit durch ausdrückliche Bezugnahme in die Beschreibung aufgenommen wird, um Textwiederholungen nach Möglichkeit zu vermeiden.

Ein erfindungsgemäßes Arbeitsfluss-Management-System für Computernetze mit einer Mehrzahl von Computern, nämlich wenigstens einem Server-Computer und einer Anzahl von Client-Computern, welche Client-Computer über ein Computernetz mit dem Server-Computer verbunden sind, welcher Server-Computer eine IT-Infrastruktur bereitstellt oder Teil einer solchen ist, weist zumindest die nachfolgend beschriebenen Bestandteile auf:
a) eine erste programm-/hardwaretechnische Einrichtung, die zum Erstellen und Verwalten von Arbeitsflüssen programmtechnisch dazu ausgebildet ist, eine Folge von Funktionen, die zur Bearbeitung wenigstens eines Objektes in dem Computernetz notwendig sind, auszuwählen, bei Bedarf zu parametrisieren und zu verknüpfen, deren Funktionsübergänge von wenigstens einem Computer in dem Computernetz steuerbar sind, um aus der Folge von Funktionen einen Arbeitsfluss zu erstellen, welche erste Einrichtung für das Erstellen des Arbeitsflusses eingerichtet ist für einen Zugriff auf
b) wenigstens eine elektronische Speichereinrichtung, in welcher Speichereinrichtung eine Anzahl an Vorlagen für Arbeitsflüsse gespeichert sind,
c) Prozessormittel, welche dazu ausgebildet und eingerichtet sind, nach Maßgabe durch die erste Einrichtung wenigstens einen auf einer der Vorlagen basierenden Arbeitsfluss zur Ausführung zu bringen, um das Objekt zu bearbeiten, wobei der ausgeführte Arbeitsfluss Zugriff hat auf
d) wenigstens eine Datenbankeinrichtung, welche Datenbankeinrichtung Ist-Daten der IT-Infrastruktur enthält, so dass der ausgeführte Arbeitsfluss zum Ausführungszeitpunkt mit Ist-Daten der IT-Infrastruktur anreicherbar und dadurch bei seiner Ausführung an einen Ist-Zustand der IT-Infrastruktur anpassbar ist.

Erfindungsgemäß wirken demnach die erste Einrichtung, die elektronische Speichereinrichtung, die Prozessormittel und die Datenbankeinrichtung zusammen. Die genannte erste Einrichtung dient zum Erstellen und Verwalten von Arbeitsflüssen. Zu diesem Zweck greift sie auf die elektronische Speichereinrichtung zu, in welcher Speichereinrichtung eine Anzahl von Vorlagen für Arbeitsflüsse gespeichert ist. Mit Hilfe der ersten Einrichtung können diese Vorlagen ausgewählt, parametrisiert und gegebenenfalls editiert werden, bevor sie anschließend durch die Prozessormittel zur Ausführung gebracht werden. Zum Ausführungszeitpunkt haben die ausgeführten Arbeitsflüsse erfindungsgemäß Zugriff auf eine spezielle Datenbankeinrichtung, welche Datenbankeinrichtung Ist-Daten der IT-Infrastruktur erhält. Damit ist es erfindungsgemäß möglich, die ausgeführten Arbeitsflüsse zum Ausführungszeitpunkt mit Ist-Daten der IT-Infrastruktur anzureichern. Dies bedeutet, dass die genannten Ist-Daten bei der Ausführung des Arbeitsflusses berücksichtigt werden und dessen Ablauf entsprechend beeinflussen können. Dies ist gleichbedeutend damit, dass der Arbeitsfluss bei seiner Ausführung an einen Ist-Zustand der IT-Infrastruktur anpassbar bzw. angepasst ist.

Beispielsweise kann in der Datenbankeinrichtung als Ist-Zustand der IT-Infrastruktur gespeichert sein, dass diese zur Bereitstellung eines Webdienstes zwei Server in einem bestimmten Rechenzentrum bereitstellt, während bei entsprechender Auslastung des Webdienstes ein dritter Server einem anderen Rechenzentrum hinzugeschaltet werden kann. Dieses Hinzuschalten soll dann erfolgen, wenn eine Auslastung der ersten beiden Server einen gewissen Schwellwert übersteigt. Bei Ausführung eines entsprechenden Arbeitsflusses ist somit im Rahmen der vorliegenden Erfindung vorgesehen, dass sowohl die gegenwärtige Konfiguration der IT-Infrastruktur als auch deren aktuelle Belastung oder Auslastung anhand der genannten Ist-Daten berücksichtigt wird und dass der Arbeitsfluss entsprechend anhand der vorstehend genannten Ist-Daten angepasst abläuft, um vorstehend beispielsweise den dritten Server zuzuschalten, sobald die Ist-Auslastung der ersten beiden Server über den genannten Schwellwert ansteigt.

Wie der Fachmann erkennt, ist die vorliegende Erfindung jedoch keinesfalls auf das vorstehend ausführlich beschriebene Anwendungsbeispiel beschränkt, sondern lässt sich auf alle denkbaren Anwendungen innerhalb von Computernetzen ausdehnen, bei denen ein Arbeitsfluss ausgeführt wird, welcher zum Ausführungszeitpunkt auf Ist-Daten der IT-Infrastruktur zugreift und diese in seinen Ablauf miteinbezieht.

Eine erste Weiterbildung des erfindungsgemäßen Systems sieht vor, dass die bereits beschriebene Datenbankeinrichtung wenigstens zwei Datenbanken umfasst. Eine dieser Datenbanken lässt sich als statische Datenbank bezeichnen, während die andere Datenbank eine dynamische Datenbank ist. Dabei enthält die erstgenannte, statische Datenbank Daten betreffend einen Ist-Zustand der realen und/oder virtuellen Konfiguration der IT-Infrastruktur, welche die programmtechnisch und hardwaretechnisch installierten Ressourcen umfasst. Die zweitgenannte, dynamische Datenbank enthält Daten betreffend einen Ist-Zustand der realen und/oder virtuellen Leistung/Leistungsfähigkeit oder Belastung der IT-Infrastruktur. Letzterer Aspekt wird alternativ auch als "Performance" bezeichnet und umfasst beispielsweise die Ressourcenauslastung der IT-Infrastruktur in Form von bestehenden Serververbindungen, Datendurchsätzen, CPU-Auslastung oder dergleichen. Auf diese Weise kann bei der Ausführung von Arbeitsflüssen flexibel auf unterschiedliche Ist-Werte oder Ist-Daten der IT-Infrastruktur zurückgegriffen werden, welche auf unterschiedlichen Zeitskalen relevant sind. Im Falle der ersten Datenbank handelt es sich um eine Zeitskala im Bereich von Tagen, Wochen oder Monaten, während die Zeitskala der zweiten Datenbank eher im Sekunden- oder Minutenbereich liegt.

Eine andere Weiterbildung des erfindungsgemäßen Systems sieht vor, dass die Vorlagen für Arbeitsflüsse, welche in der elektronischen Speichereinrichtung gespeichert sind, wenigstens eine der folgenden und vorzugsweise sowie ohne Beschränkung alle der folgenden Vorlagenarten umfassen:
- durch einen Benutzer, insbesondere einen Benutzer der ersten Einrichtung, im Wesentlichen frei editierbare Editiervorlagen;
- VDI-Vorlagen für Arbeitsflüsse zur Bereitstellung virtueller Rechnereinheiten, vorzugsweise zur Virtualisierung von Desktop-PCs, Arbeitsplatzrechnern oder Mikrocomputern, höchst vorzugsweise zur Erstellung von Schulungsumgebungen;
- Arbeitsplatz-Verwaltungsvorlagen für Standard-Arbeitsflüsse im Rahmen der Systemadministration, wie die Freigabe von Peripheriegeräten, das Ändern von Passwörtern, das Einrichten und Verwalten von Nutzerkonten oder dergleichen.

Bei den Editiervorlagen handelt es sich um sogenannte "Custom Workflows", welche es einem entsprechend geschulten und berechtigten Benutzer ermöglichen, im Wesentlichen freie und vollständig neue Arbeitsflüsse zu generieren. Die VDI-Vorlagen ermöglichen insbesondere die Bereitstellung virtueller Desktops, beispielsweise zur Erzeugung einer Schulungsumgebung mit einer Anzahl von virtuellen PCs und eines Trainer-PC an einem bestimmten Ort zu einem bestimmten Zeitpunkt. VDI-Vorlagen enthalten entsprechend vorgegebene Arbeitsflüsse, welche insbesondere nur noch hinsichtlich der vorstehend genannten Parameter angepasst werden müssen, was auch einem weniger geübten Benutzer bei entsprechender Berechtigung leicht gelingt. Des Weiteren existieren sogenannte Arbeitsplatz-Verwaltungsvorlagen, welche Standard-Arbeitsflüsse im Rahmen der Systemadministration beinhalten, welche auch heutzutage noch oft in zeitaufwändiger Handarbeit von Systemadministratoren erstellt werden. Dies betrifft beispielsweise die Freigabe von Peripheriegeräten, wie Druckern oder dergleichen, das Ändern von Passworten, das Einrichten von Nutzerkonten oder dergleichen.

Es hat sich als besonders vorteilhaft erwiesen, wenn im Rahmen einer entsprechenden Weiterbildung des erfindungsgemäßen Systems die genannten Vorlagen in einem Nur-Lese-Format in der Speichereinrichtung gespeichert sind, sodass sie auch von ungeübten Benutzern nicht gelöscht werden können und so innerhalb des Systems dauerhaft zur Verfügung stehen.

Eine andere Weiterbildung des erfindungsgemäßen Systems sieht vor, dass die Auswahl der gespeicherten Vorlagen, das heißt die Auswahl, welche Arten und Typen von Vorlagen in der Speichereinrichtung gespeichert sind, anhand einer beim Anbieter des Systems erstellten und geführten Statistik erfolgt. Eine solche Statistik kann sich insbesondere in der Häufigkeit bestimmter Beratungsanfragen durch Benutzer des Systems bei diesem Anbieter orientieren und dabei insbesondere einer FAQ-Hitliste entsprechen (FAQ: Frequently Asked Questions - häufig gestellte Fragen). Dem Anbieter oder Betreiber des Systems ist es verständlich jederzeit möglich, die gespeicherten Vorlagen auf der Grundlage neuer Beratungsanfragen oder aus anderen Gründen zu ändern, zu ergänzen oder zu aktualisieren.

Eine wieder andere Weiterbildung des erfindungsgemäßen Systems sieht vor, dass die erste Einrichtung mindestens einen der folgenden, vorzugsweise programmtechnisch ausgebildeten Bestandteil aufweist:
- eine Arbeitsfluss-Entwurfeinrichtung, die in datentechnischer Wirkverbindung steht mit einem elektronischen Inventarverzeichnis der IT-Infrastruktur einerseits und mit der Speichereinrichtung andererseits, welche Arbeitsfluss-Entwurfeinrichtung vorzugsweise eine Bedienoberfläche bereitstellt, über welche Bedienoberfläche ein Benutzer auf die Arbeitsfluss-Vorlagen zugreifen kann, höchst vorzugsweise zumindest auf die Editiervorlagen, um neue und/oder angepasste Arbeitsfluss-Vorlagen zu erstellen und in der Speichereinrichtung abzuspeichern;
- eine Arbeitsfluss-Verwaltungseinrichtung, die dazu ausgebildet ist, bestehende Arbeitsflüsse in Abhängigkeit von vorgegebenen oder vorgebbaren Arbeitsfluss-Funktionsparametern, sowie vorzugsweise nach erfolgter Freigabe durch einen autorisierten Benutzer, über die Prozessormittel zur Ausführung zu bringen;
- eine Prozessautomatisierungs-Datenbank, welche vorzugsweise in datentechnischer Wirkverbindung mit der Arbeitsfluss-Entwurfeinrichtung und/oder mit der Arbeitsfluss-Verwaltungseinrichtung steht und welche mit der Erstellung, Verwaltung und Ausführung verbundene Prozessautomatisierungsdaten enthält, insbesondere die Arbeitsfluss-Funktionsparameter und/oder Log-Daten für angelegte und/oder geänderte Arbeitsflüsse.

Auf die Möglichkeit des Entwerfens und Verwaltens/Bearbeitens von Arbeitsflüssen durch Benutzer des Systems wurde weiter oben bereits grundsätzlich hingewiesen. Im Rahmen der beschriebenen Weiterbildung des erfindungsgemäßen Systems dient die Arbeitsfluss-Entwurfeinrichtung dazu, neue Arbeitsfluss-Vorlagen zu erstellen oder bestehende Arbeitsfluss-Vorlagen zu bearbeiten. Diese Arbeitsfluss-Vorlagen können anschließend wieder in der Speichereinrichtung abgespeichert werden. Dagegen ist die Arbeitsfluss-Verwaltungseinrichtung zu dem Zweck vorgesehen, bestehende Arbeitsflüsse auszuwählen, für eine gegebene Anwendung zu parametrisieren und anschließend zur Ausführung zu bringen. Dies kann grundsätzlich auch durch weniger geübte Benutzer geschehen, worauf weiter unten noch genauer eingegangen wird. Allerdings kann die Arbeitsfluss-Verwaltungseinrichtung auch eine Freigabemöglichkeit insbesondere für neue oder geänderte Arbeitsflüsse durch einen autorisierten Benutzer beinhalten. Die erwähnte Prozessautomatisierungs-Datenbank kann insbesondere dazu dienen, eine Änderungshistorie für Arbeitsflüsse zu protokollieren.

Es wurde an anderer Stelle bereits darauf hingewiesen, dass zumindest die Arbeitsfluss-Entwurfeinrichtung für einen wenig geübten Endbenutzer des Systems nicht ohne Weiteres zugänglich sein sollte.

Eine äußerst bevorzugte Weiterbildung des erfindungsgemäßen Systems sieht eine Kommunikationseinrichtung zur bidirektionalen Kommunikation in einem Webportal vor, um bei diesem Webportal neue oder geänderte Arbeitsfluss-Vorlagen zur Verwendung durch andere Benutzer des Systems zu hinterlegen oder entsprechende Vorlagen von dort herunterzuladen. Wenn also ein Systembenutzer oder ein Mitarbeiter des Systemanbieters einen neuen Workflow erstellt, besteht nach der beschriebenen Weiterbildung des Systems die Möglichkeit, diesen Workflow auf dem Webportal zu hinterlegen, um ihn für andere Benutzer verfügbar zu machen. Umgekehrt kann ein Benutzer des Systems auf den genannten Webportalen nachschauen, ob dort bereits Arbeitsflüsse existieren, die er für die Bewältigung eines konkreten Problems nutzen kann oder möchte.

Eine wieder andere Weiterbildung des erfindungsgemäßen Systems zeichnet sich durch eine erste programm-/hardwaretechnische Zugriffseinrichtung aus, welche Zugriffseinrichtung dazu ausgebildet ist, einem Benutzer datentechnischen Zugriff auf die erste Einrichtung zu verschaffen. Bei dem Benutzer kann es sich insbesondere um einen Endbenutzer oder um einen Administrator handeln, wobei vorliegend der Begriff "Endbenutzer" für einen wenig geübten Benutzer und der Begriff "Administrator" für einen gut geschulten und entsprechend berechtigten geübten Benutzer verwendet wird. Der genannte datentechnische Zugriff kann sich insbesondere auf die Arbeitsfluss-Entwurfeinrichtung und/oder auf die Arbeitsfluss-Verwaltungseinrichtung erstrecken, was dem jeweiligen Benutzer entsprechend ermöglicht, Arbeitsflüsse zu erstellen, zu bearbeiten und zu verwalten oder zur Ausführung zu bringen. Dabei kann die genannte erste Zugriffseinrichtung vorzugsweise einen Internetbrowser umfassen. Der Zugriff muss jedoch nicht zwingend über das Internet erfolgen, alternativ kommt auch der Zugriff über ein Intranet, Extranet oder über anderes datentechnisches Kommunikationsnetz, wie ein Mobilfunknetz oder dergleichen, in Betracht.

Die genannte erste Zugriffseinrichtung ist zu unterscheiden von einer gemäß einer anderen Weiterbildung des erfindungsgemäßen Systems vorgesehenen zweiten programm-/hardwaretechnischen Zugriffseinrichtung, welche ihrerseits dazu ausgebildet ist, einer zweiten programm-/hardwaretechnischen Einrichtung datentechnischen Zugriff auf die erste Einrichtung zu verschaffen. Bei der genannten zweiten Einrichtung kann es sich insbesondere um ein Echtzeit-Ereignis-Management oder ein IT-Service-Management handeln. Diese stehen symbolisch für automatisierte Prozesse oder Software-Anwendungen, welche ohne direktes Einwirken eines Benutzers auf die erste Vorrichtung zugreifen. Vorzugsweise ist der entsprechende Zugriff durch die zweite Einrichtung jedoch nur eingeschränkt möglich. Beispielsweise besitzt die zweite Einrichtung in der Regel keine Berechtigung, Arbeitsflüsse zu erstellen oder zu bearbeiten, sondern lediglich eine Verwaltung im Sinne von Auswahl oder Ausführung ist zulässig.

Beispielsweise kann es einer Echtzeit-Ereignis-Management-Anwendung möglich sein, über die zweite Zugriffseinrichtung einen geeigneten Arbeitsfluss zu starten, wodurch das System auf das zugrunde liegende Ereignis reagiert. Der gleiche Ansatz kann im Rahmen eines IT-Service-Managements zur Sicherung der IT-Service-Qualität verwendet werden.

Wenn vorliegend davon die Rede ist, dass der Zugriff auf die erste Einrichtung des Systems mittels eines Webdienstes oder Webservices erfolgt, so wird unter einem Webdienst/Webservice eine Software-Anwendung verstanden, die mit einem Uniform Resource Identifier (URI) eindeutig identifizierbar ist und deren Schnittstelle als XML-Artefakt oder in vergleichbarer Weise definiert, beschrieben und gefunden werden kann. Auf diese Weise unterstützt ein Webdienst/Webservice die direkte Interaktion mit anderen Software-Agenten unter Verwendung XML-basierter Nachrichten oder dergleichen durch den Austausch über internetbasierte Protokolle.

Eine äußerst bevorzugte Weiterbildung des erfindungsgemäßen Systems zeichnet sich durch eine Zugriffsmöglichkeit auf die Datenbankeinrichtung aus, vorzugsweise auf die erste, statische Datenbank der Datenbankeinrichtung. Auf diese Weise ist es über die beschriebene Zugriffsmöglichkeit möglich, den Ist-Zustand der realen und/oder virtuellen Konfiguration der IT-Infrastruktur zu modellieren. Auf eine derartige Modellierbarkeit wurde weiter oben bereits exemplarisch hingewiesen. Da erfindungsgemäß die Arbeitsflüsse zum Ausführen des Zeitpunkts auf die Datenbankeinrichtung zugreifen können, lässt sich eine derartige Modellierung der IT-Infrastruktur unmittelbar in die Arbeitsflüsse einbinden bzw. bei deren Ausführung berücksichtigen.

Im Zuge einer anderen Weiterbildung des erfindungsgemäßen Systems kann außerdem vorgesehen sein, dass die IT-Infrastruktur hardware- und softwaretechnischen IT-Einrichtungen unterschiedlicher Hersteller, Anbieter und/oder Dienstleister umfasst. Die vorliegende Erfindung ermöglicht auf diese Weise erstmalig eine herstellerunabhängige Modellierbarkeit der IT-Infrastruktur zwecks Berücksichtigung bei der Ausführung von Arbeitsflüssen unter der Verwendung von Ist-Daten.

Weitere Eigenschaften und Vorteile der vorliegenden Erfindung werden nachfolgend anhand von Ausführungsbeispielen unter Bezugnahme auf die Zeichnung beschrieben.

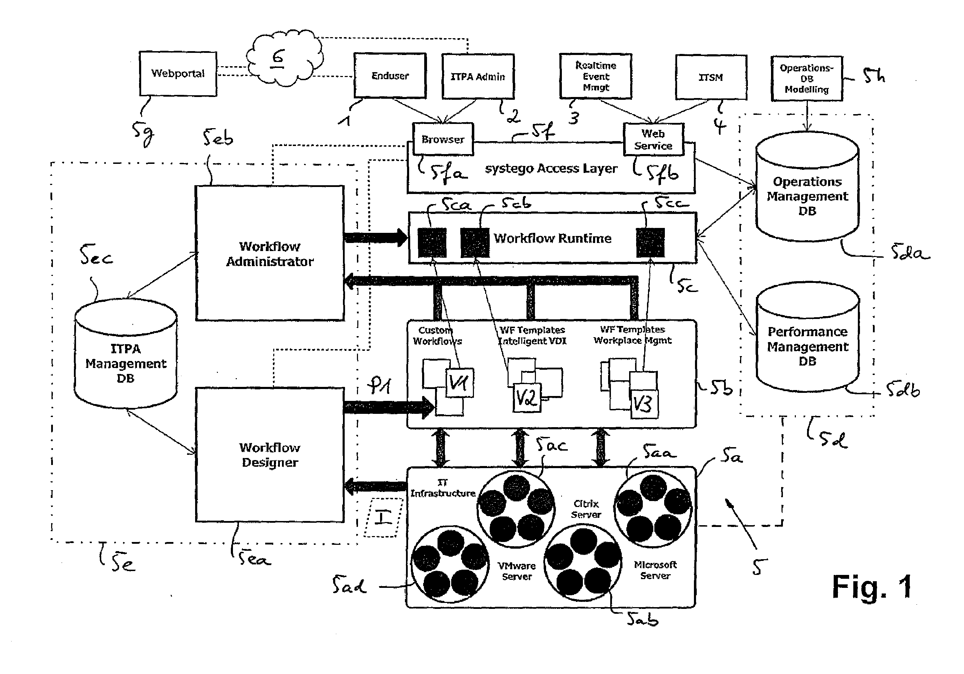

- Figur 1: zeigt schematisch eine Ausgestaltung des erfindungsgemäßen Arbeitsfluss-Management-Systems.

Figur 1 zeigt schematisch anhand eines Blockschaltbilds ein Arbeitsfluss-Management-System für Computernetze mit einer Mehrzahl von Computern. Der Begriff Computer ist in diesem Zusammenhang breit auszulegen und umfasst nicht nur herkömmliche Arbeitsplatzrechner (Desktop-PC), sondern auch Server, Notebooks und alle Arten von programmierbaren oder programmtechnisch gesteuerten digitalen Geräten, wie Smartphones, Multimedia-Endgeräten, Spielekonsolen, Fernseher und dergleichen, welche über ein Computernetz miteinander kommunizieren können.

In Übereinstimmung mit Figur 1 umfasst das Arbeitsfluss-Management-System (nachfolgend kurz als "System" bezeichnet) zunächst erste bis vierte Computer (Bezugszeichen 1 - 4), welche auch als Client-Computer bezeichnet werden. Computer 1 trägt die Bezeichnung "Enduser", was bedeutet, dass er einem Endbenutzer des Systems zugeordnet ist. Unter einem Endbenutzer sei vorliegend ein Nutzer verstanden, der das System in (zugriffsbeschränkter Form) lediglich anwendet, ohne mit weitergehenden Administratorbefugnissen ausgestattet zu sein.

Computer 2 trägt die Bezeichnung "ITPA Admin" und ist entsprechend einem Administrator für IT-Prozessautomatisierung zugeordnet. Bei diesem Benutzer handelt es sich entsprechend um einen Benutzer mit weitergehenden Zugriffsrechten auf die Ausgestaltung und Arbeitsweise des Systems.

Computer 3 trägt die Bezeichnung "Realtime Event Management (Mngt)". Hierbei handelt es sich um ein Gerät, welches für eine (vollautomatische) Ereignisüberwachung ausgebildet und eingerichtet ist, beispielsweise um einen Sensor in einer Produktionsanlage, um einen Kartenleser zur Gebäudezugangskontrolle oder dergleichen.

Computer 4 trägt die Bezeichnung "ITSM", was für den Begriff "IT-Service-Management" steht. Hierbei kann es sich um ein Endgerät handeln, welches entsprechend (programmtechnisch) dazu eingerichtet ist, die Qualität eines bestimmten IT-Dienstes, wie die Verfügbarkeit eines Programms oder die Zeitdauer eines Verbindungsaufbaus über das Internet, zu überwachen.

Die vorstehend beschriebenen Computer 1 - 4 greifen gemäß den von Ihnen ausgehenden Pfeilen über ein nicht explizit dargestelltes Computernetz auf einen Server-Computer 5 zu, dessen wesentliche Bestandteile nachfolgend genauer erläutert werden:

Der Server-Computer 5 stellt in dem Computernetz eine IT-Infrastruktur bereit, welche in Figur 1 mit dem Bezugszeichen 5a bezeichnet ist. Gemäß der vorliegenden Darstellung kann eine solche IT-Infrastruktur 5a beispielsweise einen ersten Server 5aa (Microsoft-Server, d.h. Server für Anwendungen der Firma Microsoft), einen zweiten Server 5ab (Citrix-Server, das heißt Server für Anwendungen der Firma Citrix), einen dritten Server 5ac (VMware-Server, das heißt Server für Anwendungen der Firma VMware) und einen nicht näher bezeichneten vierten Server 5ab, umfassen, ohne dass die Erfindung auf eine derartige Anzahl und Auswahl von Servern 5aa - ad beschränkt wäre. Wie der Fachmann erkennt, müssen die Server 5aa - ad nicht als (Unter-)Bestandteile des Server-Computers 5 ausgebildet sein, sondern können zumindest teilweise als eigenständige physikalische Entitäten realisiert sein.

Weiter umfasst der Server-Computer 5 wenigstens eine elektronische Speichereinrichtung 5b, in welcher Speichereinrichtung 5b eine Anzahl von Vorlagen für Arbeitsflüsse (Workflows) gespeichert sind. Die genannten Vorlagen sind in Figur 1 aus Gründen der Übersichtlichkeit nicht vollzählig explizit bezeichnet. Exemplarisch bezeichnet Bezugszeichen V1 eine Vorlage für einen sogenannten "Custom Workflow", das heißt eine im Wesentlichen frei editierbare Arbeitsfluss-Vorlage zum Erstellen eines neuen Arbeitsflusses innerhalb des Systems. Bei Bezugszeichen V2 ist exemplarisch eine Vorlage für einen Arbeitsfluss zur Bereitstellung virtueller Rechnereinheiten dargestellt, was in Figur 1 auch mit "WF Template Intelligent VDI" bezeichnet ist. Bei Bezugszeichen V3 ist exemplarisch eine Vorlage zur Arbeitsplatzverwaltung für Standard-Arbeitsflüsse im Rahmen der Systemadministration dargestellt, was in Figur 1 auch mit "WF Template Workplace Management (Mgmt)" bezeichnet ist.

Allgemein handelt es sich bei einem Arbeitsfluss um eine Folge von (Programm-)Funktionen, die zur Bearbeitung wenigstens eines Objektes in dem Computernetz notwendig sind. Bei dem genannten Objekt kann es sich um jedes beliebige in einem Computernetz bearbeitbares Objekt handeln, beispielsweise ohne Beschränkung um ein Benutzerkonto, eine Speicherplatzverwaltung, eine Datei- oder Druckerfreigabe, ein Gerätetreiber oder dergleichen. Ein derartiger Arbeitsfluss enthält demnach eine Folge von Funktionen oder Befehlen, die je nach Anwendungsfall geeignet parametrisiert und verknüpft sind, wobei die Funktionsübergänge von wenigstens einem Computer in ein Computernetz steuerbar sind, sodass aus der Folge von Funktionen ein Arbeitsfluss entsteht.

Die Vorlagen V1 - V3 stellen bestimmte Muster typischer Arbeitsflüsse für bestimmte Objekte dar, die bestenfalls noch zu parametrisieren und anschließend auszuführen bzw. abzuarbeiten sind. Dabei kommen den Vorlagearten V2 und V3 sehr spezielle Arten von Arbeitsabläufen zu, worauf weiter oben bereits hingewiesen wurde. So dienen Vorlagen vom Typ V2 zur Bereitstellung der Rechnereinheiten, vorzugsweise zur Virtualisierung von Desktop-PCs, Arbeitsplatzrechnern oder Mikrocomputern, höchst vorzugsweise zur Erstellung von Schulungsumgebungen, wenn beispielsweise zu einem bestimmten Datum sechs virtuelle Schulungs-PCs und ein Trainer-PC mit entsprechender Software benötigt werden. Bei den Vorlagen vom Typ V3 handelt es sich um Standard-Arbeitsabläufe im Rahmen der Systemadministration. Hierzu gehören zum Beispiel die Freigabe von Peripheriegeräten (Drucker, Scanner oder dergleichen), das Ändern von Passwörtern, das Einrichten und Verwalten von Nutzerkonten oder dergleichen. Beide Arten von Arbeitsflüssen V2, V3 benötigen zu ihrem Ablauf nur einige wenige Nutzereingaben und laufen ansonsten auf einer gegebenen IT-Infrastruktur 5a im Wesentlichen immer nach dem gleichen Schema ab.

Die Editiervorlagen vom Typ V1 ermöglichen dagegen einem erfahrenen Benutzer das im Wesentlichen völlig freie Aufsetzen eines neuen Arbeitsflusses, worauf weiter unten noch genauer eingegangen wird.

Weiterhin umfasst das System 5 bei Bezugszeichen 5c Prozessormittel, welche dazu ausgebildet und eingerichtet sind, wenigstens einen auf einer der Vorlagen V1 - V3 basierenden Arbeitsfluss zur Ausführung zu bringen. Dies ist in Figur 1 auch mit "Workflow Runtime" bezeichnet. Die schwarzen Quadrate innerhalb der Box 5c bezeichnen sogenannte Arbeitsfluss-Instanzen ("instanciated workflows"), welche in Figur 1 mit Bezugszeichen 5ca - 5cc bezeichnet sind. Wesentlich dabei ist, dass die ausgeführten Arbeitsflüsse 5ca - 5cc Zugriff haben auf eine Datenbankeinrichtung 5d, welche Datenbankeinrichtung 5d Ist-Daten der IT-Infrastruktur 5a enthält. Die Zugriffsmöglichkeit ist in Figur 1 durch die Verbindungspfeile zwischen den Prozessormitteln 5c und der Datenbankeinrichtung 5d bzw. den in der Datenbankeinrichtung 5d enthaltenen Datenbanken 5da, 5db symbolisiert. Bei der Datenbank 5da handelt es sich um eine als statisch bezeichnete Datenbank, welche Daten betreffend einen Ist-Zustand der realen und/oder virtuellen Konfiguration der IT-Infrastruktur 5a beinhaltet. Diese Datenbank ist in Figur 1 auch mit "Operations Management DB" bezeichnet. Bei der anderen Datenbank 5db handelt es sich um eine Datenbank, welche Daten betreffend einen Ist-Zustand der realen und/oder virtuellen Leistung unter Belastung der IT-Infrastruktur 5a beinhaltet.

Beispielsweise ist in der Operations-Datenbank 5da verzeichnet, ob ein durch das System 5 angebotener Webdienst, wovon weiter unter noch exemplarisch die Rede sein wird, aktuell die Ressourcen einer bestimmten Anzahl von Servern in einem bestimmten Rechenzentrum nutzt, welche Anzahl bei Erreichen eines Last-Schwellwerts erhöht werden soll. Die Performance-Datenbank 5db enthält Daten betreffend die aktuelle (gemessene) Leistung oder Belastung der IT-Infrastruktur 5a, beispielsweise deren CPU-Auslastung, eine Anzahl bestimmter Serververbindungen, Datendurchsatz und -übertragungsrate oder dergleichen. Durch den Zugriff der Prozessormittel 5a auf die Datenbankeinrichtung 5d bzw. die darin enthaltenen Datenbanken 5da, 5db, besteht im Rahmen der vorliegenden Erfindung die Möglichkeit, einen ausgeführten Arbeitsfluss 5ca - 5cc zum Ausführungszeitpunkt mit Ist-Daten der IT-Infrastruktur 5a anzureichern und so bei seiner Ausführung an einen Ist-Zustand der IT-Infrastruktur 5a anzupassen.

In diesem Zusammenhang bedeutet der Begriff "Anreichern", dass ein genauer Ablauf des Arbeitsflusses von den in der Datenbankeinrichtung 5d enthaltenen Ist-Daten abhängt, das heißt das die Ist-Daten bei der Ausführung des Arbeitsflusses, also in Form von Parametern, Verwendung finden, um den Ablauf des Arbeitsflusses an den Ist-Zustand der IT-Infrastruktur anzupassen. In diesem Zusammenhang bezeichnet die gestrichelte Linie unten rechts in Figur 1 eine signal- und datentechnische Wirkverbindung zwischen der IT-Infrastruktur 5a und der Datenbankeinrichtung 5d, wodurch sichergestellt ist, dass in der Datenbankeinrichtung 5d immer aktuelle Ist-Daten betreffend die IT-Infrastruktur 5a enthalten sind.

Des Weiteren umfasst das System 5 bei Bezugszeichen 5e (strichpunktierte Box im linken Teil der Figur 1) eine programm-/hardwaretechnische Einrichtung, die zum Erstellen und Verwalten von Arbeitsflüssen ausgebildet ist. Die Einrichtung 5e hat zu diesem Zweck Zugriff auf die Speichereinrichtung 5b bzw. die darin enthaltenen Vorlagen V1 - V3, was in Figur 1 durch einen entsprechenden Pfeil P1 symbolisiert ist. Wie der Fachmann erkennt, weist der genannte Pfeil P1 lediglich auf die Editiervorlage V1, wobei grundsätzlich nur diesbezüglich eine echte Bearbeitung von Arbeitsflüssen durch einen Benutzer stattfindet. Der Pfeil P1 nimmt seinen Ausgang bei einer als "Workflow Designer" bezeichneten Arbeitsfluss-Entwurfeinrichtung 5ea, welche vorzugsweise eine Bedienoberfläche bereitstellt, über welche Bedienoberfläche ein Benutzer auf die Arbeitsfluss-Vorlagen V1 zugreifen kann, um neue und/oder angepasste Arbeitsfluss-Vorlagen zu erstellen und in der Speichereinrichtung 5b abzuspeichern. Die Verwendung der Arbeitsfluss-Entwurfeinrichtung 5ea steht vorzugsweise nur geschulten Benutzern mit entsprechender Berechtigung zur Verfügung. Alle anderen Benutzer sollen grundsätzlich auf die vorgefertigten Arbeitsflüsse V2 und V3 zurückgreifen.

Bei Bezugszeichen I ist schematisch noch ein elektronisches Inventarverzeichnis der IT-Infrastruktur 5a dargestellt, auf welches die Arbeitsfluss-Entwurfeinrichtung 5ea bzw. ein diese verwendender Benutzer zugreifen kann, um Arbeitsflüsse zu erstellen, welche einen konkreten Bezug zur IT-Infrastruktur 5a aufweisen. Entsprechend sollen die vertikalen Doppelpfeile zwischen der IT-Infrastruktur 5a und der Speichereinrichtung 5b in Figur 1 symbolisieren, dass die in der Speichereinrichtung 5b gespeicherten Arbeitsfluss-Vorlagen einen konkreten Bezug zu den realen/virtuellen Gegebenheiten der IT-Infrastruktur 5a besitzen.

Zusätzlich zu der bereits beschriebenen Arbeitsfluss-Entwurfeinrichtung 5ea umfasst die Einrichtung 5e bei Bezugszeichen 5eb noch eine Arbeitsfluss-Verwaltungseinrichtung. Diese ist dazu ausgebildet, bestehende Arbeitsflüsse (Vorlagen V1 - V3) in der Speichereinrichtung 5b in Abhängigkeit von vorgegebenen oder vorgebbaren Arbeitsfluss-Funktionsparametern über die Prozessormittel 5c zur Ausführung zu bringen, worauf weiter oben bereits hingewiesen wurde. Dies kann beinhalten, dass über die Arbeitsfluss-Verwaltungseinrichtung 5eb zunächst eine Freigabe von Arbeitsflüssen durch einen autorisierten Benutzer, beispielsweise einen Systemadministrator, erfolgen muss, bevor Arbeitsflüsse in dem System ausgeführt werden können. Auch können über die Arbeitsfluss-Verwaltungseinrichtung bestimmte Arten von Arbeitsflüssen für bestimmte Benutzergruppen innerhalb des Systems pauschal freigegeben werden, während anderen Benutzergruppen auf bestimmte Arbeitsflüsse keinen Zugriff haben.

Gemäß Figur 1 umfasst die Einrichtung 5e weiterhin eine Prozessautomatisierungs-Datenbank 5ec, welche in Figur 1 auch als "ITPA Management DB" bezeichnet ist. Die genannte Datenbank 5ec steht in datentechnischer Wirkverbindung sowohl mit der Arbeitsfluss-Entwurfeinrichtung 5ea als auch mit der Arbeitsfluss-Verwaltungseinrichtung 5eb. Sie enthält Prozessautomatisierungsdaten, welche in Beziehung mit der Erstellung, Verwaltung und Ausführung von Arbeitsflüssen stehen. Insbesondere können hier Arbeitsfluss-Parameter und/oder Log-Daten für angelegte und/oder geänderte Arbeitsflüsse gespeichert sein, beispielsweise um eine Änderungshistorie nachvollziehen zu können.

Weiterhin umfasst das System 5 gemäß Figur 1 noch eine erste Zugriffseinrichtung 5fa, welche dazu ausgebildet ist, einem Benutzer, insbesondere einem Endbenutzer (Computer 1) oder einem Prozessautomatisierungs-Administrator (Computer 2), datentechnischen Zugriff auf die Einrichtung 5e zu verschaffen, und zwar zumindest zu der Arbeitsfluss-Verwaltungseinrichtung 5eb oder aber zu der Arbeitsfluss-Verwaltungseinrichtung 5eb und der Arbeitsfluss-Entwurfeinrichtung 5ea (Letzteres nur im Falle des Administrators; Computer 2). In Figur 1 ist die genannte Zugriffseinrichtung speziell als Webbrowser ausgebildet, während die genannten Zugriffsmöglichkeiten durch gestrichelte Verbindungslinien symbolisiert sind. Der Webbrowser 5fa ist Bestandteil einer übergeordneten Einrichtung 5f, welche in Figur 1a auch als "Systego Access Layer" bezeichnet ist. Wie weiter oben bereits erwähnt wurde, erlaubt die Zugriffseinrichtung 5a dem Endbenutzer 1 lediglich den Zugriff auf die Arbeitsfluss-Verwaltungseinrichtung 5eb, beispielsweise durch Eingabe eines Passworts oder durch Single-Sign-on, sodass der Endbenutzer 1 einen bestimmten (vorgespeicherten Arbeitsfluss zwar ausführen, nicht aber ändern oder einen neuen Arbeitsfluss erstellen kann. Dagegen kann der Administrator 2 über die Zugriffseinrichtung 5fa insbesondere auch auf die Arbeitsfluss-Entwurfeinrichtung 5ea zugreifen, um Arbeitsflüsse neu zu erstellen oder zu bearbeiten, diese anschließend abzuspeichern und/oder zur Ausführung zu bringen.

Die genannte übergeordnete Einrichtung 5f umfasst noch eine zweite Zugriffseinrichtung 5fb, welche dazu ausgebildet ist, einer anderen programm-/hardwaretechnischen Einrichtung Zugriff auf die Einrichtung 5e zu verschaffen. Bei der genannten programm-/hardwaretechnischen Einrichtung handelt es sich gemäß Figur 1 um die bereits angesprochenen Computer oder Endgeräte 3, 4, vorliegend also ein Echtzeit-Ereignismanagement und ein IT-Service-Management, worauf weiter oben schon detailliert eingegangen wurde. Derartige programm-/hardwaretechnische Einrichtungen 3, 4 greifen vorzugsweise nur auf die Arbeitsfluss-Verwaltungseinrichtung 5eb zu, um vorgegebene Arbeitsflüsse zur Ausführung zu bringen, beispielsweise wenn ein bestimmtes Ereignis eintritt und/oder wenn eine IT-Servicequalität bestimmten Anforderungen nicht genügt. Wie in Figur 1 dargestellt, ist die zweite Zugriffseinrichtung 5fb als Webdienst oder Webservice ausgebildet. Bei einem Webdienst oder Webservice handelt es sich um eine Software-Anwendung, die mit einem Uniform Resource Identifier (URI) eindeutig identifizierbar ist und deren Schnittstelle über ein XML-Artefakt definiert, beschrieben und gefunden werden kann. Ein Webservice unterstützt die direkte Interaktion mit anderen Software-Agenten, beispielsweise auf den Geräten 3, 4, und die Verwendung speziell XML-basierter Nachrichten, beispielsweise durch Austausch über internetbasierte Protokolle, was dem Fachmann an sich bekannt ist. Über den Webdienst 5fb ist es somit möglich, innerhalb des beschriebenen Systems 5 automatisiert Arbeitsflüsse zur Anwendung zu bringen, die mit Ist-Daten der IT-Infrastruktur 5a des Systems 5 "angereichert" sind.

Wie in Figur 1 weiterhin dargestellt ist, umfasst das System 5 des Weiteren noch ein Webportal 5g, welches physikalisch nicht notwendigerweise auf derselben Infrastruktur angesiedelt sein muss, wie das restliche System 5. Dem Endbenutzer 1 und dem Administrator 2 ist es möglich, über ein Computernetz, vorliegend das Internet 6, auf das Webportal 5g zuzugreifen, wozu eine geeignete Kommunikationseinrichtung zur bidirektionalen Kommunikation zwischen dem Benutzer bzw. den Geräten 1,2 und dem Webportal 5g vorgesehen ist, beispielsweise nach Art eines Internetbrowsers, welche dem Fachmann bekannt und in Figur 1 nicht explizit dargestellt ist. Das Webportal 5g dient dazu, neue oder geänderte Arbeitsfluss-Vorlagen zur Verwendung durch andere Benutzer des Systems zu hinterlegen oder entsprechende Vorlagen von dort herunterzuladen. Wenn also beispielsweise für einen in dem System 5 häufig benötigten Arbeitsfluss anhand einer Editiervorlage V1 eine neue Arbeitsfluss-Vorlage erstellt wurde, kann diese Vorlage von einem entsprechend berechtigten Benutzer, beispielsweise dem Administrator 2, über das Internet 6 in dem Webportal 5g zur allgemeinen Verwendung hinterlegt werden.

Schließlich ist bei Bezugszeichen 5h noch eine Zugriffsmöglichkeit auf die Datenbankeinrichtung 5d dargestellt, vorzugsweise auf die Operations-Datenbank 5da innerhalb der Datenbankeinrichtung 5d. Die genannte Zugriffsmöglichkeit 5h könnte als Software-Schnittstelle oder Bedienoberfläche innerhalb des Systems 5 bereitgestellt sein. Es ist jedoch auch möglich, von außen über ein Computernetz bzw. eine entsprechende Datenverbindung auf die Datenbank 5da zuzugreifen, sofern hierfür eine entsprechende Berechtigung existiert. Die Zugriffsmöglichkeit 5h erlaubt es, den Ist-Zustand der realen oder virtuellen Konfiguration der IT-Infrastruktur, wie er in der betreffenden Datenbank 5da hinterlegt wird, enthalten ist, zu modellieren. Mit anderen Worten: Einem entsprechend autorisierten Benutzer ist es auf diese Weise möglich, die Konfiguration der IT-Infrastruktur gezielt an bestimmte Anforderungen anzupassen. Beispielhaft wurde in diesem Zusammenhang weiter oben bereits erwähnt, dass die konkrete Realisierung des Webservice 5fb dergestalt angepasst oder modelliert werden kann, dass hierfür grundsätzlich zwei Server zur Verfügung stehen, wohingegen bei Erreichen eines bestimmten (Last-)Schwellwerts in einem bestimmten Rechenzentrum ein dritter Server für den Webservice 5fb bereitgestellt werden soll. Diese grundsätzliche Bereitstellung steht in der Operations-Datenbank 5da, während die angesprochene Schwellwert-Abfrage anhand des Inhalts der Performance-Datenbank 5db erfolgt, worauf weiter oben bereits hingewiesen wurde.

Es ist insbesondere zur Bedienung der Arbeitsfluss-Verwaltungseinrichtung 5eb möglich, für Endbenutzer (Computer 1) und Administratoren (Computer 2) verschiedene Bedienoberflächen vorzusehen, welche die Zugriffsmöglichkeiten des Benutzers entsprechend beschränken bzw. erweitern.

Insgesamt ermöglicht die vorliegende Erfindung die umfassende Erstellung und Verwaltung von Arbeitsflüssen in Computernetzen, welche Arbeitsflüsse sich in neuartiger Weise dadurch auszeichnen, dass sie mit Ist-Daten der IT-Infrastruktur operieren und in diesem Zusammenhang eine weitgehende Modellierbarkeit der Infrastrukturdaten ermöglichen.

## Patentansprüche

1. Arbeitsfluss-Management-System für Computernetze mit einer Mehrzahl von Computern, nämlich wenigstens einem Server-Computer (5) und einer Anzahl von Client-Computern (1-4), welche Client-Computer über ein Computernetz mit dem Server-Computer verbunden sind, welcher Server-Computer eine IT-Infrastruktur (5a) bereitstellt, aufweisend:
a) eine erste programm-/hardwaretechnische Einrichtung (5e), die zum Erstellen und Verwalten von Arbeitsflüssen programmtechnisch dazu ausgebildet ist, eine Folge von Funktionen, die zur Bearbeitung wenigstens eines Objektes in dem Computernetz notwendig sind, auszuwählen, bei Bedarf zu parametrisieren und zu verknüpfen, deren Funktionsübergänge von wenigstens einem Computer in dem Computernetz steuerbar sind, um aus der Folge von Funktionen einen Arbeitsfluss zu erstellen, welche erste Einrichtung für das Erstellen des Arbeitsflusses eingerichtet ist für einen Zugriff auf
b) wenigstens eine elektronische Speichereinrichtung (5b), in welcher Speichereinrichtung eine Anzahl an Vorlagen (V1-V3) für Arbeitsflüsse gespeichert sind,
c) Prozessormittel (5c), welche dazu ausgebildet und eingerichtet sind, nach Maßgabe durch die erste Einrichtung (5e) wenigstens einen auf einer der Vorlagen (V1-V3) basierenden Arbeitsfluss zur Ausführung zu bringen, um das Objekt zu bearbeiten, wobei der ausgeführte Arbeitsfluss Zugriff hat auf
d) wenigstens eine Datenbankeinrichtung (5d), welche Datenbankeinrichtung Ist-Daten der IT-Infrastruktur (5a) enthält, so dass der ausgeführte Arbeitsfluss zum Ausführungszeitpunkt mit Ist-Daten der IT-Infrastruktur anreicherbar und dadurch bei seiner Ausführung an einen Ist-Zustand der IT-Infrastruktur anpassbar ist.

2. System nach Anspruch 1,
**dadurch gekennzeichnet, dass**
die Datenbankeinrichtung (5d) wenigstens zwei Datenbanken umfasst, nämlich eine erste, statische Datenbank (5da) und eine zweite, dynamische Datenbank (5db), welche erste Datenbank erste Daten betreffend einen Ist-Zustand der realen und/oder virtuellen Konfiguration der IT-Infrastruktur (5a) beinhaltet, und welche zweite Datenbank zweite Daten betreffend einen Ist-Zustand der realen und/oder virtuellen Leistung oder Belastung der IT-Infrastruktur (5a) beinhaltet.

3. System nach Anspruch 1 oder 2,
**dadurch gekennzeichnet, dass**
die Vorlagen (V1-V3) für Arbeitsflüsse wenigstens eine der folgenden, vorzugsweise alle der folgenden Vorlagenarten umfassen:
- durch einen Benutzer, insbesondere einen Benutzer der ersten Einrichtung, im Wesentlichen frei editierbare Editiervorlagen (V1);
- VDI-Vorlagen (V2) für Arbeitsflüsse zur Bereitstellung virtueller Rechnereinheiten, vorzugsweise zur Virtualisierung von Desktop-PCs, Arbeitsplatzrechnern oder Mikrocomputern, höchst vorzugsweise zur Erstellung von Schulungsumgebungen;
- Arbeitsplatz-Verwaltungsvorlagen (V3) für Standard-Arbeitsflüsse im Rahmen der Systemadministration, wie die Freigabe von Peripheriegeräten, das Ändern von Passwörtern, das Einrichten und Verwalten von Nutzerkonten oder dergleichen.

4. System nach zumindest Anspruch 3,
**dadurch gekennzeichnet, dass**
die Vorlagen (V1-V3) in einem Nur-Lese-Format in der Speichereinrichtung (5b) gespeichert sind.

5. System nach Anspruch 3 oder 4,
**dadurch gekennzeichnet, dass**
eine Auswahl der gespeicherten Vorlagen (V1-V3) anhand einer beim Anbieter des Systems erstellten und geführten Statistik erfolgt, welche Statistik die Häufigkeit von Beratungsanfragen durch Benutzer des Systems berücksichtigt.

6. System nach mindestens einem der Ansprüche 1 bis 5,
**dadurch gekennzeichnet, dass**
die erste Einrichtung (5e) wenigstens einen der folgenden, vorzugsweise programmtechnisch ausgebildeten Bestandteile aufweist:
- eine Arbeitsfluss-Entwurfeinrichtung (5ea), die in datentechnischer Wirkverbindung steht mit einem elektronischen Inventarverzeichnis (I) der IT-Infrastruktur (5a) einerseits und mit der Speichereinrichtung (5b) andererseits, welche Arbeitsfluss-Entwurfeinrichtung vorzugsweise eine Bedienoberfläche bereitstellt, über welche Bedienoberfläche ein Benutzer auf die Arbeitsfluss-Vorlagen zugreifen kann, höchst vorzugsweise zumindest auf die Editiervorlagen (V1) gemäß Anspruch 3, um neue und/oder angepasste Arbeitsfluss-Vorlagen zu erstellen und in der Speichereinrichtung (5b) abzuspeichern;
- eine Arbeitsfluss-Verwaltungseinrichtung (5eb), die dazu ausgebildet ist, bestehende Arbeitsflüsse in Abhängigkeit von vorgegebenen oder vorgebbaren Arbeitsfluss-Funktionsparametern, sowie vorzugsweise nach erfolgter Freigabe durch einen autorisierten Benutzer, über die Prozessormittel (5c) zur Ausführung zu bringen;
- eine Prozessautomatisierungs-Datenbank (5ec), welche vorzugsweise in datentechnischer Wirkverbindung mit der Arbeitsfluss-Entwurfeinrichtung (5ea) und/oder mit der Arbeitsfluss-Verwaltungseinrichtung (5eb) steht und welche mit der Erstellung, Verwaltung und Ausführung verbundene Prozessautomatisierungsdaten enthält, insbesondere die Arbeitsfluss-Funktionsparameter und/oder Log-Daten für angelegte und/oder geänderte Arbeitsflüsse.

7. System nach zumindest Anspruch 6,
**dadurch gekennzeichnet, dass**
die Arbeitsfluss-Entwurfeinrichtung (5ea) und/oder die Arbeitsfluss-Verwaltungseinrichtung (5eb) für einen Endbenutzer (1) ohne weiteres nicht zugänglich ist.

8. System nach zumindest Anspruch 6 oder 7,
weiter **gekennzeichnet durch**
eine Kommunikationseinrichtung zur bidirektionalen Kommunikation mit einem Webportal (5g), um bei diesem Webportal neue oder geänderte Arbeitsfluss-Vorlagen zur Verwendung **durch** andere Benutzer zu hinterlegen oder entsprechende Vorlagen von dort herunterzuladen.

9. System nach zumindest Anspruch 8,
weiter **gekennzeichnet durch**
das genannte Webportal (5g).

10. System nach mindestens einem der Ansprüche 1 bis 9,
weiter **gekennzeichnet durch**
eine erste programm-/hardwaretechnische Zugriffseinrichtung (5fa), welche dazu ausgebildet ist, einem Benutzer, insbesondere einem Endbenutzer (1) oder einem Prozessautomatisierungs-Administrator (2), datentechnischen Zugriff auf die erste Einrichtung (5e) zu verschaffen, vorzugsweise auf die Arbeitsfluss-Entwurfeinrichtung (5ea) und/oder auf die Arbeitsfluss-Verwaltungseinrichtung (5eb) gemäß Anspruch 4, um Arbeitsflüsse zu erstellen, zu bearbeiten, zu verwalten oder zur Ausführung zu bringen, wobei die erste Zugriffseinrichtung (5fa) vorzugsweise einen Internetbrowser umfasst.

11. System nach mindestens einem der Ansprüche 1 bis 10,
weiter **gekennzeichnet durch**
eine zweite programm-/hardwaretechnische Zugriffseinrichtung (5fb), welche dazu ausgebildet ist, einer zweiten programm-/hardwaretechnischen Einrichtung, insbesondere einem Echtzeit-Ereignismanagement (3) oder einem IT-Service-Management (4), datentechnischen Zugriff auf die erste Einrichtung (5e) zu verschaffen, vorzugsweise auf die Arbeitsfluss-Entwurfeinrichtung (5ea) und/oder auf die Arbeitsfluss-Verwaltungseinrichtung (5eb) gemäß Anspruch 4, um Arbeitsflüsse zu erstellen, zu bearbeiten, zu verwalten oder zur Ausführung zu bringen, wobei die zweite Zugriffseinrichtung (5fb) vorzugsweise zur Bereitstellung des Zugriffs mittels eines Webdienstes ausgebildet ist, wobei höchst vorzugsweise der Zugriff nur eingeschränkt möglich ist.

12. System nach mindestens einem der Ansprüche 1 bis 11,
weiter **gekennzeichnet durch**
eine Zugriffsmöglichkeit auf die Datenbankeinrichtung (5d), vorzugsweise auf die erste, statische Datenbank (5da) gemäß Anspruch 2, um den Ist-Zustand der realen und/oder virtuellen Konfiguration der IT-Infrastruktur (5a) zu modellieren.

13. System nach mindestens einem der Ansprüche 1 bis 12,
**dadurch gekennzeichnet, dass**
die IT-Infrastruktur (5a) hardware- und softwaretechnische IT-Einrichtungen (5aa-5ad) unterschiedlicher Hersteller, Anbieter und/oder Dienstleister umfasst.

14. System nach zumindest Anspruch 12 und Anspruch 13,
**dadurch gekennzeichnet, dass**
die Konfiguration der IT-Infrastruktur (5a) herstellerunabhängig modellierbar ist.
